(19) Europäisches Patentamt
European Patent Office
Office européen des brevets

(11) **EP 4 786 942 A1**

(12) **EUROPEAN PATENT APPLICATION**
published in accordance with Art. 153(4) EPC

(43) Date of publication:
**05.08.2026 Bulletin 2026/32**

(21) Application number: **24872465.0**

(22) Date of filing: **27.09.2024**

(51) International Patent Classification (IPC):
***G01M 3/28*** *(2006.01)*

(52) Cooperative Patent Classification (CPC):
**G01M 3/28**

(86) International application number:
**PCT/JP2024/034556**

(87) International publication number:
**WO 2025/070681 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 JP 2023168568**

(71) Applicant: **PANASONIC INTELLECTUAL
PROPERTY
MANAGEMENT CO., LTD.
Kadoma-shi, Osaka 571-0057 (JP)**

(72) Inventors:
- **KOREKUNI, Jin**
  **Osaka 571-0057 (JP)**
- **MATSUDA, Masataka**
  **Osaka 571-0057 (JP)**
- **TAKAKURA, Yuya**
  **Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **WATER LEAKAGE DETECTION SYSTEM**

(57)    A water leakage detection system includes a plurality of flowmeters and a center device that manages the flowmeters. Each flowmeter includes: a flow rate measurer that measures a flow rate of water in a passage of the water supply network; a pressure acquirer that acquires pressure of the water in the passage; a temperature acquirer that acquires temperature of the water in the passage; and a communicator that communicates with the center device. The center device includes: a central communicator that communicates with the communicators; and a water leakage determiner that, when each of the flow rates of the water detected by the plurality of flowmeters in a target area for water leakage detection is a threshold or less, and the flow rate of the water flowing into the target area is a threshold or less, determines determination pressures for determining whether or not water leakage is present, based on the temperatures and the pressures acquired by the flowmeters, and compares the calculated determination pressures with a prestored reference pressure to determine whether or not the water leakage is present.

FIG. 2

## Description

## Technical Field

The present disclosure relates to a water leakage detection system.

## Background Art

Conventionally, a water leakage detection system has been known, in which water leakage detection is performed by cooperation between communicators located at respective ultrasonic flowmeters and a central processing portion including a central communicator (PTL 1). According to this water leakage detection system, when each of all the flow rates of the ultrasonic flowmeters in a target area and the flow rate on an upstream side of the target area is a threshold or less, a propagation time of an ultrasonic wave between two adjacent ultrasonic flowmeters is measured. Then, whether or not water leakage between the two adjacent ultrasonic flowmeters is present is determined based on the comparison between the measured propagation time and a propagation time when the water leakage is not present.

## Citation List

## Patent Literature

PTL 1: Japanese Laid-Open Patent Application Publication No. 2022-169885

## Summary of Invention

## Technical Problem

However, the above conventional water leakage detection system performs water leakage detection separately from normal flow rate measurement. Therefore, depending on an interval at which the water leakage detection is performed, there is a risk of overlooking the occurrence of the water leakage. In addition, there is a problem in that current consumption increases due to an increase in the number of times the ultrasonic waves are transmitted and received.

An object of the present disclosure is to provide a water leakage detection system that can suppress current consumption and improve the reliability of water leakage detection.

## Solution to Problem

A water leakage detection system of the present disclosure includes: a plurality of flowmeters located at respective consumer's places in a water supply network; and a center device that manages the plurality of flowmeters, wherein: each flowmeter includes a flow rate measurer that measures a flow rate of water in a passage of the water supply network, a pressure acquirer that acquires pressure of the water in the passage, a temperature acquirer that acquires temperature of the water in the passage, and a communicator that communicates with the center device; and the center device includes a central communicator that communicates with the communicators, and a water leakage determiner that, when each of the flow rates of the water detected by the plurality of flowmeters in a target area for water leakage detection is a threshold or less, and the flow rate of the water flowing into the target area is a threshold or less, determines determination pressures for determining whether or not water leakage is present, based on the temperatures and the pressures acquired by the flowmeters, and compares the calculated determination pressures with a prestored reference pressure to determine whether or not the water leakage is present on the passage.

According to the present disclosure, based on the temperatures and the water pressures acquired by the flowmeters, the water leakage determiner calculates the determination pressures for determining whether or not the water leakage is present. Then, the water leakage determiner compares the calculated determination pressures with the prestored reference pressure to determine whether or not the water leakage is present. Therefore, unlike conventional cases, the transmission and reception of the ultrasonic wave in the water leakage detection are unnecessary, and this can suppress the current consumption. Moreover, unlike conventional water leakage detection systems that perform the water leakage detection separately from the normal flow rate measurement, the water leakage determination can be performed at all times when each flow rate satisfies a predetermined condition. Therefore, it is possible to reduce the risk of overlooking the occurrence of the water leakage. Thus, according to the water leakage detection system of the present disclosure, the current consumption can be suppressed, and the reliability of the water leakage detection can be improved.

In the above disclosure, the flowmeters may be ultrasonic flowmeters each including a pair of ultrasonic transceivers located at a measurement passage and a propagation time measurer that measures a propagation time of an ultrasonic wave between one of the ultrasonic transceivers and the other; the flow rate measurer may measure the flow rate of the water based on the propagation time measured by the propagation time measurer; the pressure acquirer may acquire the pressure of the water in the passage based on a waveform of an ultrasonic signal received by the other ultrasonic transceiver; and the temperature acquirer may acquire the temperature of the water in the passage based on the propagation time measured by the propagation time measurer.

According to the above configuration, the pressure acquirer acquires the water pressure in the passage based on the waveform of the ultrasonic signal received by the other ultrasonic transceiver, and the temperature acquirer acquires the temperature of the water in the passage based on the propagation time measured by the propagation time measurer. Therefore, the above water pressure and the above temperature can be acquired using parameters (i.e., the waveform of the ultrasonic signal and the propagation time of the ultrasonic wave) calculated in the normal flow rate measurement. Thus, it is unnecessary to additionally provide a pressure sensor that detects the water pressure and a temperature sensor that detects the temperature.

**Brief Description of Drawings**

FIG. 1 is a configuration diagram of a water supply network according to one embodiment.
FIG. 2 is a configuration diagram of an ultrasonic flowmeter.
FIG. 3 is a configuration diagram of a water leakage detection system.
FIG. 4 is a graph showing one example of a relationship between water pressure and water temperature.
FIG. 5 is a diagram showing one example of a received signal of an ultrasonic wave.
FIG. 6 is a flowchart showing the flow of a process performed by the water leakage detection system.

**Description of Embodiments**

Hereinafter, a water leakage detection system according to an embodiment of the present disclosure will be described with reference to the drawings. The water leakage detection system described below is merely one embodiment of the present disclosure. Therefore, the present disclosure is not limited to the following embodiment, and additions, deletions, and modifications may be made without departing from the scope of the present disclosure.

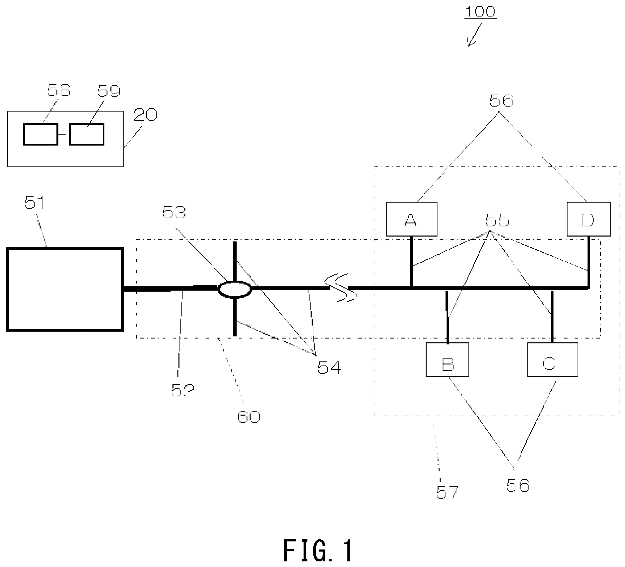

As shown in FIG. 1, a water leakage detection system 100 according to the present embodiment includes a water supply facility 51, a water supply network 60, one or a plurality of consumer's places 56 in a target area 57 for water leakage detection, and a center device 20.

The water supply network 60 is a portion surrounded by a one-dot chain line in FIG. 1 and is a network that supplies water from the water supply facility 51 to the consumer's places 56 (identified by A to D in FIG. 1). Specifically, the water supply network 60 includes a main pipe 52, a branch portion 53, common pipes 54, and service pipes 55.

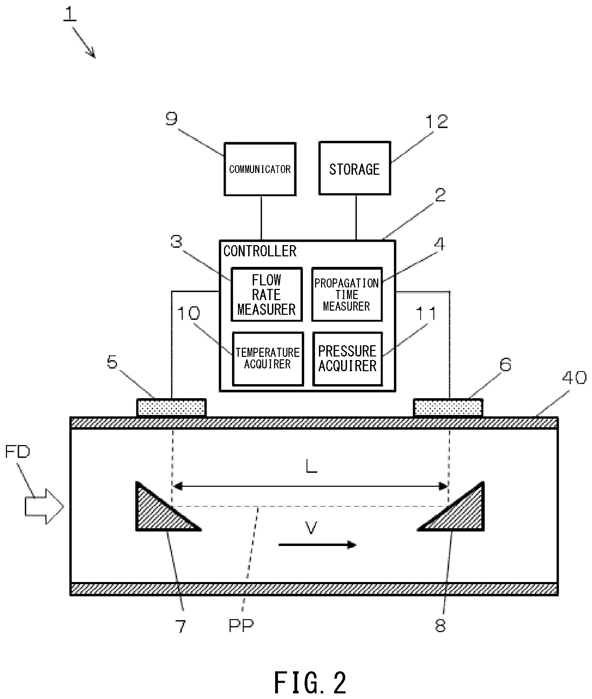

The water supply facility 51 and the branch portion 53 are connected to each other by the main pipe 52. The common pipes 54 extend from the branch portion 53. One of the common pipes 54 extends toward the target area 57, and the service pipes 55 extend from this common pipe 54. Downstream ends of the service pipes 55 are connected to the respective consumer's places 56. According to this configuration, the water from the water supply facility 51 is supplied to the consumer's places 56 through the main pipe 52, the branch portion 53, the common pipe 54, and the service pipes 55. Ultrasonic flowmeters 1 (FIG. 2) are included in the respective consumer's places 56. The configuration of the ultrasonic flowmeter 1 will be described later in detail.

The center device 20 has a function to communicate with the ultrasonic flowmeters 1 to receive meter reading data, such as measured flow rates, and issue various instructions to the ultrasonic flowmeters 1. A communication method between the center device 20 and the ultrasonic flowmeters 1 is not especially limited, and examples include cellular communication, specified low-power wireless communication, and network communication through a relay station. The center device 20 includes a water leakage determiner 58 and a central communicator 59. The central communicator 59 communicates with below-described communicators 9 included in the respective ultrasonic flowmeters 1. Based on the temperature and the pressure of the water in a passage of the water supply network 60 which are acquired by the ultrasonic flowmeter 1 of the consumer's place 56 and obtained through the central communicator 59, the water leakage determiner 58 determines whether or not the water leakage in the passage is present. Each of the common pipe 54 and the service pipe 55 corresponds to the above passage.

Next, the configuration of the ultrasonic flowmeter 1 will be described.

As shown in FIG. 2, the ultrasonic flowmeter 1 includes a controller 2, a flow rate measurer 3, a propagation time measurer 4, a first ultrasonic transceiver 5, a second ultrasonic transceiver 6, a first reflector 7, a second reflector 8, a communicator 9, a temperature acquirer 10, a pressure acquirer 11, and a storage 12.

The controller 2 includes at least one of a processor (such as a CPU), an integrated circuit (such as an ASIC), and the like. The controller 2 controls operations of the first ultrasonic transceiver 5 and the second ultrasonic transceiver 6. The controller 2 is electrically connected to the communicator 9 and the storage 12. In the present embodiment, each of the flow rate measurer 3, the propagation time measurer 4, the temperature acquirer 10, and the pressure acquirer 11 is a functional component that is functionally realized by the execution of a predetermined program by the controller 2.

The flow rate measurer 3 measures the flow rate of the water based on the propagation time that is measured by the below-described propagation time measurer 4 based on the ultrasonic signal transmitted from one of the first ultrasonic transceiver 5 and the second ultrasonic transceiver 6 and received by the other.

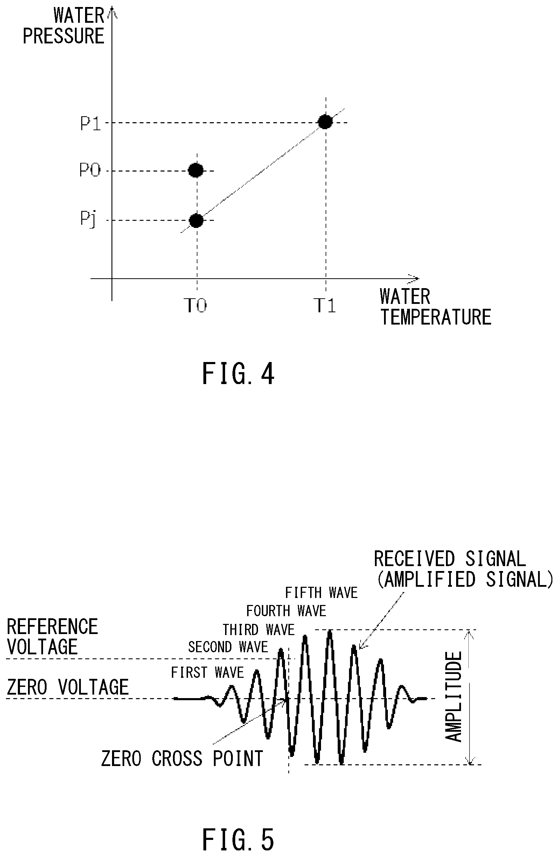

The propagation time measurer 4 measures the propagation time of the ultrasonic waves between the first ultrasonic transceiver 5 and the second ultrasonic transceiver 6. In this case, the propagation time measurer 4 specifies a zero cross point (see FIG. 5) at which the voltage of an amplified signal of a received signal received by the reception ultrasonic transceiver changes from a positive voltage to a negative voltage for the first time after the voltage of the amplified signal exceeds a reference voltage. The zero cross point indicates a time point at which the ultrasonic wave transmitted from the transmission ultrasonic transceiver is received by the reception ultrasonic transceiver. Then, the propagation time measurer 4 measures an elapsed time from the application of a below-described pulse wave to the zero cross point (i.e., the propagation time of the ultrasonic wave).

The temperature acquirer 10 acquires the temperature of the water in the above passage based on the propagation time measured by the propagation time measurer 4. Moreover, the pressure acquirer 11 acquires the pressure of the water in the above passage based on the waveform of the ultrasonic signal received by the other of the first ultrasonic transceiver 5 and the second ultrasonic transceiver 6.

A measurement passage 40 is a water passage located inside the ultrasonic flowmeter 1 and extending in one direction. The first ultrasonic transceiver 5 is located on an upstream side on an outer surface of the measurement passage 40. The first ultrasonic transceiver 5 transmits the ultrasonic wave in a radial direction of the measurement passage 40 and receives the ultrasonic wave transmitted from the second ultrasonic transceiver 6. The second ultrasonic transceiver 6 is located on a downstream side on the outer surface of the measurement passage 40. The second ultrasonic transceiver 6 transmits the ultrasonic wave in the radial direction of the measurement passage 40 and receives the ultrasonic wave transmitted from the first ultrasonic transceiver 5.

The first reflector 7 is located on an upstream side in the measurement passage 40. The first reflector 7 reflects the ultrasonic wave, transmitted from the first ultrasonic transceiver 5, toward the second reflector 8 by deflecting a traveling direction of the ultrasonic wave by 90°. Moreover, the first reflector 7 reflects the ultrasonic wave, transmitted from the second reflector 8, toward the first ultrasonic transceiver 5 by deflecting the traveling direction of the ultrasonic wave by 90°. Similarly, the second reflector 8 is located on a downstream side in the measurement passage 40. The second reflector 8 reflects the ultrasonic wave, transmitted from the first reflector 7, toward the second ultrasonic transceiver 6 by deflecting the traveling direction of the ultrasonic wave by 90°. Moreover, the second reflector 8 reflects the ultrasonic wave, transmitted from the second ultrasonic transceiver 6, toward the first reflector 7 by deflecting the traveling direction of the ultrasonic wave by 90°.

The communicator 9 communicates with external devices, such as the central communicator 59, and transmits and receives various types of data. The storage 12 includes various memories, a hard disk drive, or the like. The storage 12 stores: a threshold to be compared with the flow rates measured by below-described ultrasonic flowmeters 1A to 1D; and a threshold to be compared with the flow rate of the water flowing in the common pipe 54. Moreover, the storage 12 stores: information (for example, a calculation formula or a table) indicating a relationship between the amplitude of the received signal of the ultrasonic wave and the pressure of the water; information (for example, a calculation formula or a table) indicating a relationship between the propagation time measured by the propagation time measurer 4 and the temperature of the water; and the like. In FIG. 2, a reference sign FD indicates a direction in which the water flows, and a reference sign PP indicates a propagation path of the ultrasonic wave.

According to the above configuration, when measuring the flow rate of the water, the controller 2 applies the pulse wave to the first ultrasonic transceiver 5 to make the first ultrasonic transceiver 5 transmit the ultrasonic wave. The transmitted ultrasonic wave propagates in the measurement passage 40 along the propagation path PP through the first reflector 7 and the second reflector 8 and is then received by the second ultrasonic transceiver 6. Similarly, the controller 2 applies the pulse wave to the second ultrasonic transceiver 6 to make the second ultrasonic transceiver 6 transmit the ultrasonic wave. The transmitted ultrasonic wave propagates in the measurement passage 40 along the propagation path PP through the second reflector 8 and the first reflector 7 and is then received by the first ultrasonic transceiver 5.

The propagation time measurer 4 measures the propagation time from a time point at which the ultrasonic wave is transmitted from the first ultrasonic transceiver 5 to a time point at which the ultrasonic wave is received by the second ultrasonic transceiver 6. Moreover, the propagation time measurer 4 measures the propagation time from a time point at which the ultrasonic wave is transmitted from the second ultrasonic transceiver 6 to a time point at which the ultrasonic wave is received by the first ultrasonic transceiver 5.

The flow velocity of a fluid (water) flowing in the direction FD in the measurement passage 40 is represented by V, and the speed of sound in the fluid is represented by C. The length of a linear portion of the propagation path PP of the ultrasonic wave that propagates between the first ultrasonic transceiver 5 and the second ultrasonic transceiver 6 is represented by L. At this time, in the propagation time until the ultrasonic wave transmitted from the first ultrasonic transceiver 5 reaches the second ultrasonic transceiver 6, a propagation time t1 required for the ultrasonic wave to propagate over a distance corresponding to the length L is represented by Formula 1 below.

## Formula 1

$$t1=L/(C+V)$$

Next, in the propagation time until the ultrasonic wave transmitted from the second ultrasonic transceiver 6 reaches the first ultrasonic transceiver 5, a propagation time t2 required for the ultrasonic wave to propagate over a distance corresponding to the length L is represented by Formula 2 below.

## Formula 2

$$t2=L/(C-V)$$

Formula 3 is obtained by eliminating the speed of sound C in the fluid from Formulas 1 and 2 above. As is clear from Formula 3, when L is known, the flow velocity V can be obtained using the measured propagation times t1 and t2.

## Formula 3

$$V=L/2((1/t1)-(1/t2))$$

Next, as shown in Formula 4 below, a flow rate Q can be obtained by multiplying the flow velocity V by a sectional area S of the measurement passage 40. Thus, the flow rate Q can be calculated. In Formula 4 below, k denotes a correction coefficient for correcting various errors that occur during the measurement.

## Formula 4

$$Q=k\times(V\times S)$$

The propagation time of the ultrasonic wave between the first ultrasonic transceiver 5 and the second ultrasonic transceiver 6 includes a propagation time between the first ultrasonic transceiver 5 and the first reflector 7 and a propagation time between the second ultrasonic transceiver 6 and the second reflector 8. However, since these propagation times can be basically calculated without depending on the flow velocity, only the propagation time corresponding to the portion having the length L in the propagation path PP can be calculated. Unless otherwise specified, the following will describe a case where the ultrasonic wave transmitted from the first ultrasonic transceiver 5 is received by the second ultrasonic transceiver 6.

Next, water leakage determination performed by the water leakage detection system 100 in the target area 57 for the water leakage detection will be described with reference to the drawings.

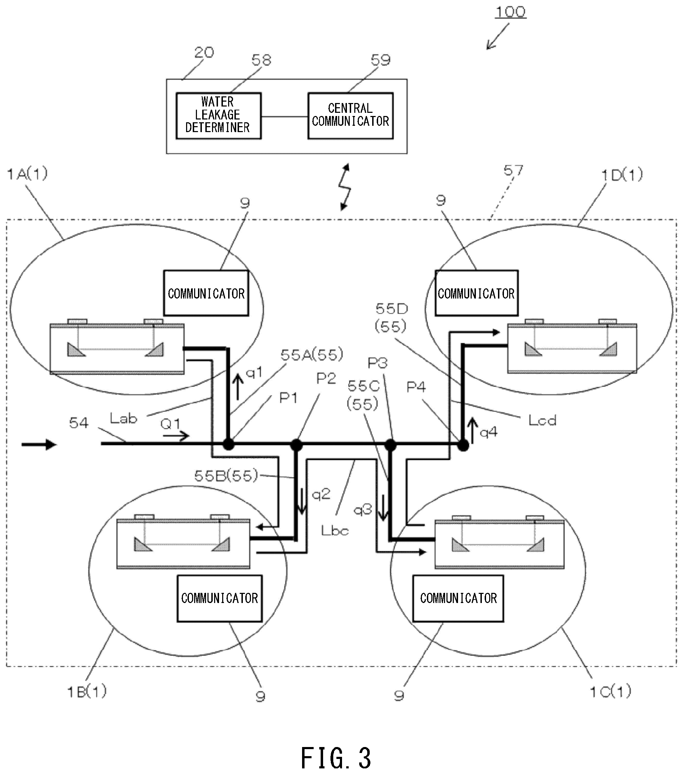

In FIG. 3, the ultrasonic flowmeter 1A is the ultrasonic flowmeter corresponding to the consumer's place A in the target area 57 shown in FIG. 1, the ultrasonic flowmeter 1B is the ultrasonic flowmeter corresponding to the consumer's place B in the target area 57, the ultrasonic flowmeter 1C is the ultrasonic flowmeter corresponding to the consumer's place C in the target area 57, and the ultrasonic flowmeter 1D is the ultrasonic flowmeter corresponding to the consumer's place D in the target area 57.

The ultrasonic flowmeter 1A is connected to the common pipe 54 by the service pipe 55A, and the ultrasonic flowmeter 1B is connected to the common pipe 54 by the service pipe 55B. The ultrasonic flowmeter 1C is connected to the common pipe 54 by the service pipe 55C, and the ultrasonic flowmeter 1D is connected to the common pipe 54 by the service pipe 55D. Moreover, branch points of the service pipes 55A to 55C from the common pipe 54 are represented by P1 to P3. The service pipe 55D is connected to a downstream end P4 of the common pipe 54.

A piping path from the ultrasonic flowmeter 1A to the ultrasonic flowmeter 1B is represented by Lab. A piping path from the ultrasonic flowmeter 1B to the ultrasonic flowmeter 1C is represented by Lbc. A piping path from the ultrasonic flowmeter 1C to the ultrasonic flowmeter 1D is represented by Lcd. Moreover, the flow rates of the water flowing in the service pipes 55A to 55D which are measured by the flow rate measurers 3 of the ultrasonic flowmeters 1A to 1D are represented by q1 to q4, respectively. Furthermore, the flow rate at the branch point P1 of the common pipe 54 is represented by Q1. The flow rate Q1 is the sum of the flow rates q1 to q4.

The water leakage determiner 58 of the center device 20 receives the flow rates q1 to q4 from the ultrasonic flowmeters 1A to 1D through the central communicator 59. Then, the water leakage determiner 58 determines whether each of the flow rates q1 to q4 detected by the ultrasonic flowmeters 1A to 1D is not more than the threshold stored in the storage 12 and also determines whether the flow rate of the water flowing into the target area 57 (i.e., the flow rate Q1) is not more than the threshold stored in the central communicator 59. When each of the flow rates q1 to q4 is the threshold or less, and the flow rate Q1 is the threshold or less, the water leakage determiner 58 executes the process for determining whether or not the water leakage is present.

In the process for determining whether or not the water leakage is present, first, each of the pressure acquirers 11 of the ultrasonic flowmeters 1A to 1D acquires the pressure of the water in the service pipe 55 based on the waveform of the ultrasonic signal received by the second ultrasonic transceiver 6. In this case, the waveform of the ultrasonic signal is, for example, the waveform shown in FIG. 5, and the pressure acquirer 11 acquires an amplitude (maximum amplitude, for example) from the waveform. Then, the pressure acquirer 11 acquires the water pressure corresponding to the above amplitude based on the information prestored in the storage 12.

Next, each of the temperature acquirers 10 of the ultrasonic flowmeters 1A to 1D acquires the water temperature in the service pipe 55 based on the propagation time measured by the propagation time measurer 4. The temperature acquirer 10 acquires the water temperature corresponding to the above propagation time based on the information prestored in the storage 12.

The water leakage determiner 58 receives the above water pressure and the above water temperature from the ultrasonic flowmeters 1A to 1D through the central communicator 59. Then, based on the temperatures and the water pressures acquired by the ultrasonic flowmeters 1A to 1D, the water leakage determiner 58 calculates determination pressures for determining whether or not the water leakage is present. Then, the water leakage determiner 58 compares the calculated determination pressures with a prestored reference pressure to determine whether or not the water leakage is present.

Specifically, as shown in FIG. 4, for example, the water pressure and the water temperature when the ultrasonic flowmeter is installed are represented by P0 and T0, respectively, and the acquired water pressure and the acquired water temperature are represented by P1 and T1, respectively. Moreover, in the following, the water pressure P0 when the ultrasonic flowmeter is installed is referred to as a reference pressure, and the water temperature T0 when the ultrasonic flowmeter is installed is referred to as reference temperature. The water leakage determiner 58 corrects the water pressure P1 at the acquired water temperature T1 to a pressure at the reference temperature T0 based on the Boyle-Charle's law. The pressure calculated by the correction is represented by Pj in FIG. 4 and corresponds to the determination pressure. When the determination pressure Pj is lower than the reference pressure P0, the water leakage determiner 58 determines that the water leakage is present. The water leakage determiner 58 executes the foregoing determination for each of the ultrasonic flowmeters 1A to 1D.

The water leakage determiner 58 calculates the difference between the determination pressure Pj and the reference pressure P0 for each of the ultrasonic flowmeters 1A to 1D and determines that the water leakage is present in the vicinity of the ultrasonic flowmeter having the largest difference. For example, when the difference of the ultrasonic flowmeter 1A is the largest, it can be estimated that the water leakage is likely to be present at the piping path Lab. When the difference of the ultrasonic flowmeter 1B or the difference of the ultrasonic flowmeter 1C is the largest, it can be estimated that the water leakage is likely to be present at the piping path Lbc. Moreover, when the difference of the ultrasonic flowmeter 1D is the largest, it can be estimated that the water leakage is likely to be present at the piping path Lcd.

Next, the flow of the process performed by the water leakage detection system 100 will be described with reference to the flowchart. The water leakage determiner 58 transmits and receives various instructions and various types of information by information exchange with the communicators 9 of the ultrasonic flowmeters 1A, 1B, 1C, and 1D through the central communicator 59.

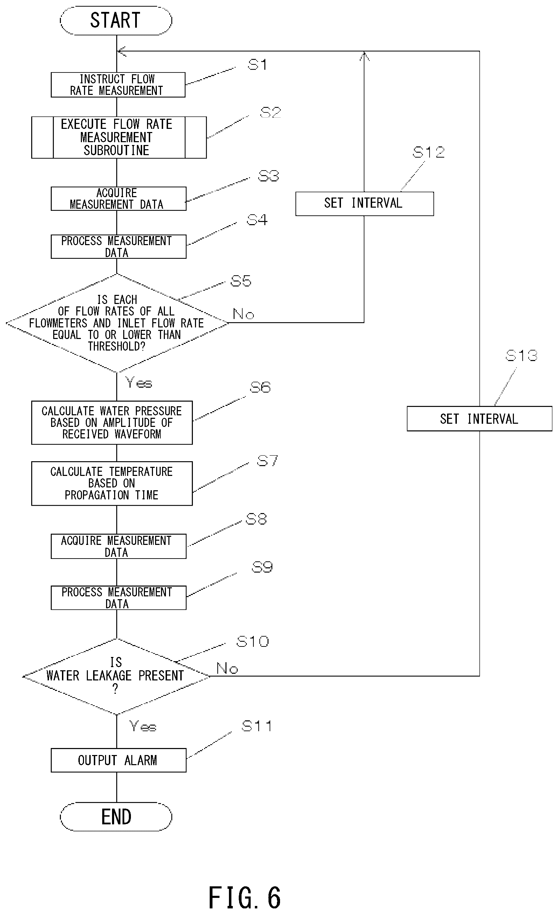

As shown in FIG. 6, first, in each of the ultrasonic flowmeters 1, a start command is issued by the controller 2 (Step S1). Specifically, the controller 2 applies the pulse wave to the first ultrasonic transceiver 5.

Next, in each of the ultrasonic flowmeters 1, a subroutine for the flow rate measurement is executed (Step S2). Thus, the flow rate is measured by each ultrasonic flowmeter 1. Next, the water leakage determiner 58 of the center device 20 acquires data of the flow rates from the ultrasonic flowmeters 1 through the central communicator 59 (Step S3).

Next, the water leakage determiner 58 calculates the flow rate Q1 at the branch point P1 of the common pipe 54 based on the data of the flow rates of the ultrasonic flowmeters 1 (Step S4). Then, the water leakage determiner 58 determines whether or not a condition that each of the flow rates detected by the ultrasonic flowmeters 1 is the threshold or less, and the flow rate Q1 is the threshold or less is satisfied (Step S5). When the condition that each of the flow rates detected by the ultrasonic flowmeters 1 is the threshold or less, and the flow rate Q1 is the threshold or less is not satisfied (No in Step S5), an interval setting command is issued (Step S12), and then, Step S1 and the subsequent steps are repeatedly executed.

On the other hand, when the condition that each of the flow rates detected by the ultrasonic flowmeters 1 is the threshold or less, and the flow rate Q1 is the threshold or less is satisfied (Yes in Step S5), the pressure acquirer 11 of each ultrasonic flowmeter 1 calculates the water pressure in the service pipe 55 based on the waveform of the ultrasonic signal (Step S6). Then, the temperature acquirer 10 of each ultrasonic flowmeter 1 calculates the water temperature in the service pipe 55 based on the propagation time measured by the propagation time measurer 4 (Step S7).

Next, in order to execute the process for determining whether or not the water leakage is present, the water leakage determiner 58 acquires, through the central communicator 59, data of the water pressure obtained by the pressure acquirer 11 of each ultrasonic flowmeter 1 and data of the water temperature obtained by the temperature acquirer 10 of each ultrasonic flowmeter 1 (Step S8). Then, the water leakage determiner 58 calculates the difference between the determination pressure Pj and the reference pressure P0 by the method described above with reference to FIG. 4 (Step S9). When it is determined as a result of Step S9 that the water leakage is likely to be present (Yes in Step S10), the water leakage determiner 58 outputs an alarm command (Step S11) and terminates the process. On the other hand, when it is determined that the water leakage is unlikely to be present (No in Step S10), the interval setting command is issued (Step S13), and then, Step S1 and the subsequent steps are repeatedly executed.

As described above, according to the water leakage detection system 100 of the present embodiment, based on the temperatures and the water pressures acquired by the ultrasonic flowmeters, the water leakage determiner 58 calculates the determination pressures for determining whether or not the water leakage is present. Then, the water leakage determiner 58 compares the calculated determination pressures with the prestored reference pressure to determine whether or not the water leakage is present. Therefore, unlike conventional cases, the transmission and reception of the ultrasonic wave in the water leakage detection are unnecessary, and this can suppress the current consumption. Moreover, unlike conventional water leakage detection systems that perform the water leakage detection separately from the normal flow rate measurement, the water leakage determination can be performed at all times when each flow rate satisfies a predetermined condition. Therefore, it is possible to reduce the risk of overlooking the occurrence of the water leakage. Thus, according to the water leakage detection system 100, the current consumption can be suppressed, and the reliability of the water leakage detection can be improved.

Moreover, in the present embodiment, the pressure acquirer 11 acquires the water pressure based on the waveform of the ultrasonic signal received by the reception ultrasonic transceiver that is one of the first ultrasonic transceiver 5 and the second ultrasonic transceiver 6, and the temperature acquirer 10 acquires the water temperature based on the propagation time measured by the propagation time measurer 4. Therefore, the above water pressure and the above water temperature can be acquired using parameters (i.e., the waveform of the ultrasonic signal and the propagation time of the ultrasonic wave) calculated in the normal flow rate measurement. Thus, it is unnecessary to additionally provide a pressure sensor that detects the water pressure and a temperature sensor that detects the water temperature.

**Modified Example**

The present disclosure is not limited to the above-described embodiment, and various modifications may be made without departing from the scope of the present disclosure. Examples are as follows.

In the above embodiment, the ultrasonic flowmeter 1 is adopted as a flowmeter. However, the above embodiment is not limited to the ultrasonic flowmeter 1 as long as the flowmeter can measure the flow rate of water. In this case, a temperature sensor that detects water temperature may be provided instead of the temperature acquirer 10 in the ultrasonic flowmeter 1, and a pressure sensor that detects water pressure may be provided instead of the pressure acquirer 11 in the ultrasonic flowmeter 1.

Moreover, in the above embodiment, based on the water temperature acquired by the temperature acquirer 10 and the water pressure acquired by the pressure acquirer 11, the water leakage determiner 58 determines whether or not the water leakage is present. However, the above embodiment is not limited to this. Based on information correlated to the water temperature (for example, the propagation time of the ultrasonic wave) and information correlated to the water pressure (for example, the amplitude of the ultrasonic wave received signal) instead of the water temperature and the water pressure, the water leakage determiner 58 may determine whether or not the water leakage is present.

Moreover, in the above embodiment, the center device 20 includes the water leakage determiner 58. However, the above embodiment is not limited to this. The water leakage determiner 58 may be included in one of the ultrasonic flowmeters 1 located in the target area 57.

Moreover, the installation location of the center device 20 is not especially limited. For example, the center device 20 may be installed together with the water supply facility 51.

Moreover, in the above embodiment, the sectional area of the common pipe 54 is normally constant, and the flow rate decreases toward the downstream side. Therefore, the flow rate at the branch point P1 may be used as the flow rate of the common pipe 54.

Moreover, in the above embodiment, four ultrasonic flowmeters 1 are connected to the common pipe 54. However, the above embodiment is not limited to this. For example, the number of ultrasonic flowmeters 1 connected to the common pipe 54 may be three or less or may be five or more.

Moreover, in the above embodiment, the ultrasonic flowmeter 1 includes two reflectors that are the first reflector 7 and the second reflector 8. However, the above embodiment is not limited to this. For example, the number of reflectors may be one or may be three or more.

Furthermore, in the above embodiment, the water leakage is described as an example. However, factors that affect the propagation time, such as the entrainment of air bubbles or foreign matter, can also be detected in the same manner.

**Reference Signs List**

| | |
|---|---|
| 1, 1A, 1B, 1C, 1D | ultrasonic flowmeter |
| 2 | controller |
| 3 | flow rate measurer |
| 4 | propagation time measurer |
| 5 | first ultrasonic transceiver |
| 6 | second ultrasonic transceiver |
| 7 | first reflector |
| 8 | second reflector |
| 9 | communicator |
| 10 | temperature acquirer |

| | |
|---|---|
| 11 | pressure acquirer |
| 12 | storage |
| 20 | center device |
| 40 | measurement passage |
| 54 | common pipe |
| 55 | service pipe |
| 56 | consumer's place |
| 57 | target area |
| 58 | water leakage determiner |
| 59 | central communicator |
| 60 | water supply network |
| 100 | water leakage detection system |

**Claims**

1. A water leakage detection system comprising:

a plurality of flowmeters located at respective consumer's places in a water supply network; and
a center device that manages the plurality of flowmeters, wherein:

each flowmeter includes

a flow rate measurer that measures a flow rate of water in a passage of the water supply network,
a pressure acquirer that acquires pressure of the water in the passage,
a temperature acquirer that acquires temperature of the water in the passage, and
a communicator that communicates with the center device; and

the center device includes

a central communicator that communicates with the communicators, and
a water leakage determiner that, when each of the flow rates of the water detected by the plurality of flowmeters in a target area for water leakage detection is a threshold or less, and the flow rate of the water flowing into the target area is a threshold or less, determines determination pressures for determining whether or not water leakage is present, based on the temperatures and the pressures acquired by the flowmeters, and compares the calculated determination pressures with a prestored reference pressure to determine whether or not the water leakage is present on the passage.

2. The water leakage detection system according to claim 1, wherein:

the flowmeters are ultrasonic flowmeters each including

a pair of ultrasonic transceivers located at a measurement passage and
a propagation time measurer that measures a propagation time of an ultrasonic wave between one of the ultrasonic transceivers and the other;

the flow rate measurer measures the flow rate of the water based on the propagation time measured by the propagation time measurer;
the pressure acquirer acquires the pressure of the water in the passage based on a waveform of an ultrasonic signal received by the other ultrasonic transceiver; and
the temperature acquirer acquires the temperature of the water in the passage based on the propagation time measured by the propagation time measurer.

FIG. 1

FIG. 2

FIG. 3

WATER
PRESSURE

P1

P0

Pj

T0　　　　T1　WATER
TEMPERATURE

FIG. 4

RECEIVED SIGNAL
(AMPLIFIED SIGNAL)

FIFTH WAVE
FOURTH WAVE
THIRD WAVE
SECOND WAVE
FIRST WAVE

REFERENCE
VOLTAGE

ZERO VOLTAGE

AMPLITUDE

ZERO CROSS POINT

FIG. 5

START

INSTRUCT FLOW RATE MEASUREMENT — S1

EXECUTE FLOW RATE MEASUREMENT SUBROUTINE — S2

ACQUIRE MEASUREMENT DATA — S3

PROCESS MEASUREMENT DATA — S4

IS EACH OF FLOW RATES OF ALL FLOWMETERS AND INLET FLOW RATE EQUAL TO OR LOWER THAN THRESHOLD? — S5

No

SET INTERVAL — S12

Yes

CALCULATE WATER PRESSURE BASED ON AMPLITUDE OF RECEIVED WAVEFORM — S6

CALCULATE TEMPERATURE BASED ON PROPAGATION TIME — S7

ACQUIRE MEASUREMENT DATA — S8

PROCESS MEASUREMENT DATA — S9

IS WATER LEAKAGE PRESENT ? — S10

No

SET INTERVAL — S13

Yes

OUTPUT ALARM — S11

END

FIG. 6

## INTERNATIONAL SEARCH REPORT

| International application No. |
| --- |
| **PCT/JP2024/034556** |

| A. | CLASSIFICATION OF SUBJECT MATTER |
| --- | --- |

*G01M 3/28*(2006.01)i
FI: G01M3/28 A

According to International Patent Classification (IPC) or to both national classification and IPC

| B. | FIELDS SEARCHED |
| --- | --- |

Minimum documentation searched (classification system followed by classification symbols)

G01F1/00-1/30;1/34-1/54;3/00-9/02; G01M3/00-3/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114383675 A (QINGDAO DINGXI COMMUNICATION CO., LTD.) 22 April 2022 (2022-04-22) | 1 |
| | paragraphs [0004]-[0033], fig. 1-3 | |
| A | paragraphs [0004]-[0033], fig. 1-3 | 2 |
| Y | JP 2022-169885 A (PANASONIC INTELLECTUAL PROPERTY MANAGEMENT CO., LTD.) 10 November 2022 (2022-11-10) | 1 |
| | paragraphs [0017], [0020]-[0022], [0072]-[0083], fig. 1, 3, 5 | |
| A | paragraphs [0017], [0020]-[0022], [0072]-[0083], fig. 1, 3, 5 | 2 |
| Y | JP 2003-35625 A (YAZAKI CORPORATION) 07 February 2003 (2003-02-07) | 1 |
| | paragraphs [0011]-[0013], [0033]-[0053] | |
| A | paragraphs [0011]-[0013], [0033]-[0053] | 2 |
| A | JP 2023-110150 A (PANASONIC INTELLECTUAL PROPERTY MANAGEMENT CO., LTD.) 09 August 2023 (2023-08-09) | 1-2 |
| | entire text, all drawings | |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2024** | **17 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| | International application No. |
| --- | --- |
| | **PCT/JP2024/034556** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2020/0149940 A1 (SPIRE METERING TECHNOLOGY LLC) 14 May 2020 (2020-05-14)<br>entire text, all drawings | 1-2 |
| A | KR 10-1865801 B1 (MUN I & C CO., LTD.) 11 June 2018 (2018-06-11)<br>entire text, all drawings | 1-2 |
| A | WO 2023/030597 A1 (KAMSTRUP A/S) 09 March 2023 (2023-03-09)<br>entire text, all drawings | 1-2 |

Form PCT/ISA/210 (second sheet) (July 2022)

**INTERNATIONAL SEARCH REPORT**
**Information on patent family members**

International application No.

**PCT/JP2024/034556**

| Patent document cited in search report | | | Publication date (day/month/year) | Patent family member(s) | | | Publication date (day/month/year) |
|---|---|---|---|---|---|---|---|
| CN | 114383675 | A | 22 April 2022 | (Family: none) | | | |
| JP | 2022-169885 | A | 10 November 2022 | (Family: none) | | | |
| JP | 2003-35625 | A | 07 February 2003 | (Family: none) | | | |
| JP | 2023-110150 | A | 09 August 2023 | (Family: none) | | | |
| US | 2020/0149940 | A1 | 14 May 2020 | (Family: none) | | | |
| KR | 10-1865801 | B1 | 11 June 2018 | (Family: none) | | | |
| WO | 2023/030597 | A1 | 09 March 2023 | EP | 4399439 | A1 | |
| | | | | CN | 117957396 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022169885 A